# EUROPÄISCHE PATENTSCHRIFT

(11) **EP 2 845 465 B1**
(45) Veröffentlichungstag und Bekanntmachung des Hinweises auf die Patenterteilung: **03.06.2020**
(21) Anmeldenummer: 14166741.0
(22) Anmeldetag: 30.04.2014
(51) Int. Cl.: A01G 13/00, A01G 13/02, E01C 9/00

(54) **Multifunktionaler Baumrost**
Multifunctional tree grid
Grille de protection multifonctionnelle

(30) Priorität: 04.09.2013 DE 102013109668
(43) Veröffentlichungstag der Anmeldung: 11.03.2015
(73) Patentinhaber: MeierGuss Limburg GmbH, 65556 Limburg (DE)
(72) Erfinder: Schreiner, Dieter, 35418 Buseck (DE); Sonnenberg, Ralf, 32120 Hiddenhausen (DE); Weis, Stefan, 65589 Hadamar (DE)
(74) Vertreter: Patentanwälte Olbricht Buchhold Keulertz

(56) Entgegenhaltungen:
- EP-A1- 0 273 155
- EP-A2- 1 655 411
- WO-A1-97/44996
- DE-U1- 20 103 122
- DE-U1-202011 104 254
- FR-A1- 2 756 576

## Beschreibung

Die vorliegende Erfindung betrifft einen Baumrost zum Abdecken des Wurzelbereiches von Bäumen, aufweisend mehrere flächige, gusseiserne vorzugsweise mit Durchbrechungen versehene Baumrostsegmente, die insbesondere mit einem Aufnahmerahmen auf einem Fundament auflegbar sind.

Die DE 20 2012 102 844 U1 zeigt einen Baumrost zum Abdecken des Wurzelbereiches von Bäumen, und der Baumrost dient dazu, dem Wurzelbereich des Baumes optimale Wachstums- beziehungsweise Lebensbedingungen dadurch zu ermöglichen, dass um den Stamm des Baumes herum eine Verdichtung des Bodens vermieden wird. Als Fundament dient ein Untergestell, und auf dem Untergestell ist ein Aufnahmerahmen aufgebracht, der als Pflasterkante bezeichnet ist. Der Baumrost umfasst mehrere Baumrostsegmente, die über den Wurzelbereich und damit um den Stamm des Baumes herum auf dem Aufnahmerahmen aufgelegt werden können. Die DE 20 2011 104 254 U1 zeigt eine weitere Ausführung eines Baumrostes mit mehreren Baumrostelementen.

Um nicht zuletzt ästhetische Anforderungen zu erfüllen, ist die Möglichkeit vorgesehen, dass die Pflasterkante gegenüber dem Untergestell höhenverstellbar gelagert und in zwei senkrechte zueinander verlaufenden horizontalen Richtungen gegenüber dem Untergestell beweglich ist. Damit kann die Pflasterkante harmonisch in den Fugenverlauf einer den Baum umgebenen Pflasterung eingefügt werden, da die Pflasterkante gegenüber dem Untergestell solange bewegt werden kann, bis ein harmonischer Übergang in die umgebene Pflasterung erzeugt ist, und auf diese Weise kann die Pflasterkante optimal bündig mit der Oberkante der Pflasterung abschließen. Nachteilhafterweise werden jedoch die Baumrostsegmente in starrer, geometrisch vorgegebener Weise miteinander verbunden, ohne dass ein Höhenausgleich der Baumrostelemente untereinander möglich ist.

Beispielsweise zeigt die DE 93 10 718 A eine weitere Ausführung eines Baumrostes mit mehreren Baumrostelementen, die über Nocken verfügen, und die Nocken dienen zum Ansetzen von Verbindungselementen zwischen den Baumrostsegmenten. Die Verbindungselemente können beispielsweise durch Schraubenbolzen gebildet werden, die mit Schraubenmuttern an den angeformten Nocken gesichert werden. Nachteilhafterweise ergeben sich jedoch auch höhere Aufwendungen bei der gusstechnischen Herstellung der Baumrostsegmente, da Bereiche mit Hinterschneidungen an den Baumrostsegmenten vorgesehen werden müssen. Beispielsweise müssen Durchgangsbohrungen in den Nocken vorgesehen werden, um Schaftschrauben durch die Bohrungen hindurchzuführen und mit einer jeweiligen Schraubenmutter zu sichern. Ein weiterer Nachteil entsteht dadurch, dass die angeformten Nocken sich unterhalb der Baumrostsegmente befinden, wodurch die Montage der Baumrostsegmente zueinander aufwendig ist.

Schließlich zeigt die DE 201 16 851 U1 einen Baumrost mit mehreren Baumrostsegmenten, die durch Bolzenelemente und in den Bolzenelementen vorgesehene Querlöcher verbunden werden. Eine derartige Verbindungstechnik der Baumrostsegmente untereinander ermöglicht nachteilhafterweise keine Höheneinstellbarkeit der Baumrostsegmente und ist durch die unterseitige Anordnung von Sicherungselementen in den Querlöchern der Bolzenelemente aufwendig in der Montage.

Aufgabe der Erfindung ist die Weiterbildung eines Baumrostes zum Abdecken des Wurzelbereiches von Bäumen mit mehreren Baumrostsegmenten, wobei die Baumrostsegmente auf verbesserte Weise miteinander verbunden sind. Insbesondere ergibt sich die Aufgabe, die Baumrostsegmente des Baumrostes auf einfache Weise höhenverstellbar anzuordnen und mit geringem Montageaufwand miteinander zu verbinden.

Diese Aufgabe wir ausgehend von einem Baumrost zum Abdecken des Wurzelbereiches von Bäumen gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zwischen zwei Baumrostsegmenten wenigstens ein Brückenelement angeordnet ist, wobei zur Verbindung der Baumrostsegmente das Brückenelement mit Schraubelementen mit beiden Baumrostsegmenten verbunden ist.

Durch die erfindungsgemäße Anordnung von Brückenelementen zwischen wenigstens zwei Baumrostsegmenten wird der Vorteil einer höheren Flexibilität der Verbindung zwischen den Baumrostsegmenten ermöglicht. Die Brückenelemente können auf verschiedene Weise durch die Schraubelemente mit den Baumrostsegmenten verbunden werden, wodurch eine Verbindung der Baumrostsegmente in verschiedenen Höhen einfach ermöglicht ist. Insbesondere können die Schraubelemente von der Oberseite der Baumrostsegmente verschraubt werden, sodass kein umständliches Fügen der Schraubelemente beispielsweise in unterseitigen Nocken oder dergleichen erforderlich ist. Die Brückenelemente können auf verschiedene Weise ausgestaltet sein, sodass bereits durch verschiedene Varianten der Anordnung eines ansonsten gleichen Brückenelementes unterschiedliche Verbindungssituationen zwischen zwei Baumrostsegmenten erzeugt werden können.

Beispielsweise können die Brückenelemente eine geometrische Form aufweisen, durch die die Baumrostsegmente höheneinstellbar sind. Mit besonderem Vorteil können die Brückenelemente ein Dachprofil aufweisen, über das die Befestigungshöhe der Baumrostsegmente insbesondere zueinander einstellbar ist. So kann beispielsweise das Brückenelement mit dem Dachprofil an die Unterseite der Baumrostsegmente angebracht werden, sodass über das Dachprofil die Höhe zweier Baumrostsegmente zueinander eingestellt wird. Ist eine plane Fläche der Brückenelemente gefordert, kann dieses beispielsweise um 180° gedreht werden, und mit einer dem Dachprofil gegenüberliegenden planen Unterseite angrenzend an die Baumrostsegmente angebracht werden. Mit weiterem Vorteil können die Brückenelemente in ihrer länglichen Ausführung einen rechteckigen Querschnitt aufweisen und über vier unterschiedliche Dachprofile verfügen, mit denen diese an den Baumrostsegmenten angebracht werden. Ein besonderer Vorteil entsteht auch dadurch, dass die Brückenelemente mit den Baumrostsegmenten beweglich vormontiert verbunden werden können, um die Montage zu vereinfachen.

Ein besonderer Vorteil der einzeln ausgeführten Brückenelemente zur Befestigung zwei Baumrostsegmente liegt darin, dass die Brückenelemente auf der Unterseite der Baumrostsegmente angeordnet werden können. Die Brückenelemente können wenigstens eine Sechskantaufnahme aufweisen, wobei vorzugsweise zwei Sechskantaufnahmen im Brückenelement vorgesehen sein können, sodass in jeder Sechskantaufnahme eine Sechskantschaubenmutter eingesetzt werden kann. Anschließend können Schraubelemente von der Oberseite der beiden Baumrostsegmente durch vorbereitete Durchgänge in den Baumrostsegmenten eingeführt werden, und in den Sechskantschraubenmuttern, die in den Sechskantaufnahmen einsitzen, eingesetzt werden. Dadurch ist eine leichte Montage ermöglicht, ohne dass die Baumrostsegmente oder die Brückenelemente ein Gewinde aufweisen müssen, wodurch Herstellungskosten eingespart werden können. Insbesondere ist kein weiteres Werkzeug notwendig, um die Sechskantschraubenmuttern auf der Unterseite der Baumrostsegmente zu sichern, wenn die Schraubelemente in die Sechskantschraubenmuttern eingesetzt werden, da die Sechskantschraubenmuttern durch die Aufnahme in der Sechskantaufnahme verdrehgesichert sind.

Gemäß einer weiteren vorteilhaften Ausführungsform des Baumrostes kann wenigstens ein Halteelement vorgesehen sein, und an das Halteelement kann beispielsweise ein Baumschutzgitter angebracht werden, das sich über der Ebene der Baumrostsegmente erstreckt. Insbesondere kann das Halteelement mittels wenigstens eines Schraubelementes zum Verschrauben des Brückenelementes auf der Oberseite der Baumrostsegmente angeordnet werden. Das oder die Schraubelemente durchlaufen dabei das Halteelement, die Baumrostsegmente und das Brückenelement und werden schließlich von der Unterseite mit einer Sechskantschraubenmutter gesichert. Somit ist durch eine einfache Verschraubung der Baumrostsegmente bereits die Anbringung von Halteelementen für ein Baumschutzgitter ermöglicht, ohne dass hierfür die Baumrostsegmente entsprechende Modifikationen aufweisen müssen.

Mit weiterem Vorteil können die Baumrostsegmente eine vordefinierte Trennfuge aufweisen, durch die ein nach innen weisendes inneres Segmentstück aus dem Baumrostsegment abtrennbar ist. Damit kann der Baumrost auf besondere Weise dem Stammwachstum des Baumes angepasst werden, und die Baumrostsegmente können bauseits an einer vordefinierten Stelle abgetrennt werden, sodass mit dem Stammwachstum des Baumes ein mitwachsender Baumrost entsteht. Um nach Abtrennen der inneren Segmentstücke die Baumrostsegmente erneut mit Brückenelementen untereinander höhenvariabel zu verbinden, können die Baumrostsegmente innenliegende Aufnahmestellen zur Anordnung der Brückenelemente aufweisen, wobei die inneren Stellen nach Abtrennung der inneren Segmentstücke am inneren Rand der Baumrostsegmente liegen. Die Brückenelemente können dabei auf gleiche erfindungsgemäße Weise zur Verbindung der Baumrostsegmente dienen.

Zur vorteilhaften Weiterbildung des Baumrostes können zwischen den Baumrostsegmenten und dem Aufnahmerahmen Stollenauflagen angeordnet sein, die beispielsweise auf der Unterseite der Baumrostsegmente selbsthaltend angeordnet werden können, oder die Stollenauflagen werden auf dem Aufnahmerahmen aufgelegt, um anschließend die Baumrostsegmente auf den Stollenauflagen aufzulegen. Die Stollenauflagen können aus unterschiedlichen Materialien ausgebildet sein, insbesondere können diese als dämpfende Einlage ausgeführt sein, um möglichen Geräuschen vorzubeugen.

Der verwendete Aufnahmerahmen kann Standardecken aufweisen, die für unterschiedliche Größen verwendbar sind und der Aufnahmerahmen kann entsprechend abgelängte Mittelteile aufweisen. Es können aber auch die Mittelteile standardisiert sein, beispielsweise auch für unterschiedliche Größen, und die Ecken können entsprechend abgelängt werden. Die Aufnahmerahmen können zentriert ausgeführt werden, d.h. im äußeren Bereich steht der Rahmen an einer/mehren Positionen oder durchgängig nach unten über und zentriert sich selbstständig über dem Fundament.

Die verwendeten Fundamente können mehrteilig und innerhalb einer Nenngröße einheitlich ausgeführt sein, um somit für unterschiedliche Designvarianten verwendbar zu sein. Die Fundamente können sich nach schräg unten aufweiten, um somit den Wurzelraum des Baumes zu vergrößern und die gewünschte Wurzelwuchsrichtung vorzugeben. Ebenso können die Fundamente mit Wurzelöffnungen ausgestattet sein. Die Fundamente können als Streifenfundamente oder als Eckfundamente ausgeführt werden. Insbesondere bei Eckfundamenten sind Winkelfehler beim Einbau nahezu ausgeschlossen, da beim Einbau nur die jeweilige Richtung des Fundamentes beachtet werden muss.

An der Unterseite der Baumrostsegmente sind Führungsanformungen ausgebildet, durch die die Brückenelemente in eine Montageposition führbar sind. Dadurch entsteht insbesondere eine erleichterte Montage, da die Baumrostsegmente bereits die erforderliche Position an den Baumrostsegmenten aufweisen können, um anschließend die Verschraubung der Brückenelemente an den Baumrostsegmenten herzustellen. Dabei müssen die Brückenelemente nicht mehr auf der Unterseite der Baumrostsegmente blind positioniert werden, da die Positionierung bereits durch die Führungsanformungen erfolgt.

Die Baumrostsegmente können insbesondere durch Gießverfahren hergestellt sein. Hierfür kann ein Gießverfahren mit einer Obergussform und mit einer Untergussform vorgesehen sein, wobei die Gießformen derart ausgeführt sein können, dass ein durch die Teilungsebene zwischen den Gussformen entstehender Teilungsgrad zur Unterseite der Baumrostsegmente hin verlagert ist. Dadurch entstehen ästhetische Vorteile bei der Betrachtung der sichtbaren Oberseite der Baumrostsegmente, wenn diese über dem Wurzelbereich eines Baumes zur Bildung des Baumrostes aufliegen. Der ästhetische Vorteil entsteht insbesondere dadurch, dass der Teilungsgrad derart zur Unterseite der Baumrostsegmente verlagert ist, dass dieser von der Oberseite der Baumrostsegmente nicht mehr sichtbar ist. Insbesondere kann die Obergussform eine größere Eingusstiefe aufweisen als die Untergussform, wodurch sich eine Verlagerung des Teilungsgrades zur Unterseite des zwischen den Gussformen hergestellten Baumrostsegmentes ergibt. Das Modell der Gussformen kann an der Unterseite so gefertigt sein, dass der Baumrost den umlaufenden Rand erhält und die Verstärkungsrippen im Innenbereich als Wechselteil können für verschiedene Designvarianten unterschiedlich sein. Auf diesem Weg kann die Modelloberseite in verschiedenen Designvarianten ausgeführt werden, ohne dass eine zusätzliche Modellwechselplatte für die Unterseite erforderlich wird. Zusätzlich kann der Lauf des Modells komplett und der Modellanschnitt zum Teil weiterverwendet werden, um verschiedene Modelloberseiten zur Herstellung der Baumrostsegmente zu ermöglichen. Damit werden weniger Modellwechselplatten benötigt, und verschiedene Baumrostsegmente sind innerhalb einer Nenngröße unabhängig vom Design kompatibel miteinander und die Zubehörteile können innerhalb der Nenngröße durchgängig verwendet werden, wodurch sich eine einfachere Lagerhaltung und ein einfacherer Austausch bei günstigeren Modellen ergibt.

Die Modellunterseite wird dabei so gefertigt, dass der Baumrost einen umlaufenden Rand erhält und die Verstärkungsrippen im Innenbereich können als Wechselteil insbesondere für verschiedene Designvarianten unterschiedlich ausgeführt werden. Auf diesem Weg kann die Modelloberseite in verschiedenen Designvarianten ausgeführt werden ohne dass eine zusätzliche Modellwechselplatte für die Unterseite erforderlich wird. Zusätzlich kann der Lauf des Modells komplett und der Modellanschnitt zum Teil für verschiedene Modelloberseiten weiter verwendet werden. Es werden weniger Wechselplatten benötigt, die Produkte sind unabhängig vom Design innerhalb einer Nenngröße kompatibel miteinander und die Zubehörteile können innerhalb einer Nenngröße durchgängig verwendet werden. Dies führt zu einer einfacheren Lagerhaltung, zu einem einfacheren Austausch und damit zu günstigeren Modellen.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht eines Baumrostes mit beispielhaft zwei Baumrostsegmenten, zwischen denen sich erfindungsgemäß ein Brückenelement befindet,
- Fig. 2: eine Unteransicht des Baumrostes, beispielhaft umfassend zwei Baumrostsegmente in Auflage auf einem Fundament,
- Fig. 3: eine perspektivische Oberansicht eines Baumrostsegmentes,
- Fig. 4: eine perspektivische Unteransicht eines Baumrostsegmentes,
- Fig. 5: eine perspektivische Oberansicht eines Brückenelementes und

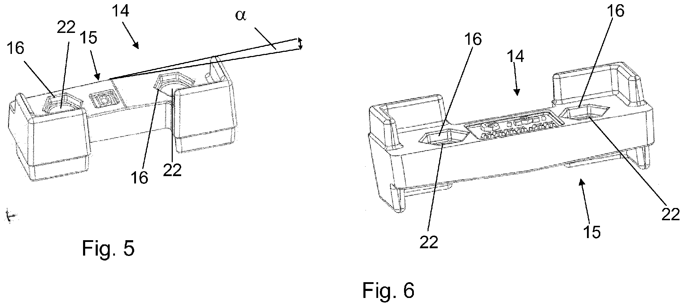

- Fig. 5: eine perspektivische Unteransicht eines Brückenelementes.

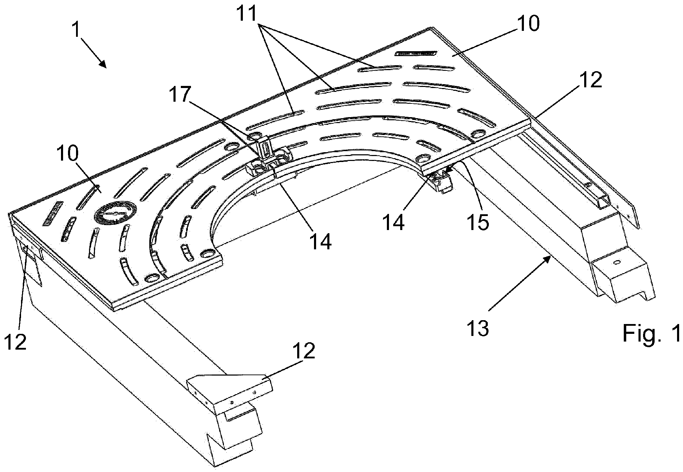

Figur 1 zeigt in einer perspektivischen Ansicht Teile eines Baumrostes 1 mit den Merkmalen der vorliegenden Erfindung. Der Baumrost 1 dient zum Abdecken des Wurzelbereiches von Bäumen und ist aus mehreren Baumrostsegmenten 10 aufgebaut, von denen beispielhaft zwei Baumrostsegmente 10 gezeigt sind, und die dargestellte Bauart des Baumrostes 1 weist in vollständiger Anordnung vier Baumrostsegmente 10 auf. Die Baumrostsegmente 10 besitzen Durchbrechungen 11, diese können den Gasaustausch positiv beeinflussen.

Die Baumrostsegmente 10 liegen auf einem Aufnahmerahmen 12 auf, der aus Standardprofilelementen wie beispielsweise ein Vierkantprofil oder ein Flachbandmaterial ausgestaltet ist. In den Eckbereichen weist der Aufnahmerahmen 12 Eckelemente auf, die die Vierkantprofile und das Flachband eckenseitig aufnehmen.

Die beiden dargestellten Baumrostsegmente 10 sind mit einem Brückenelement 14 miteinander verbunden, und das Brückenelement 14 kann mit Schraubelementen (nicht näher dargestellt) mit den Baumrostsegmenten 10 verbunden werden. Dabei befindet sich das Brückenelement 14 auf der Unterseite der Baumrostsegmente 10. Ein weiteres Brückenelement 14 ist zur Anordnung eines weiteren nicht dargestellten Baumrostsegmentes 10 an der freien Kante eines Baumrostsegmentes 10 angeordnet, wobei die Brückenelemente 14 mit einem Dachprofil 15 auf der Oberseite gezeigt ist. Das Dachprofil 15 ermöglicht im Kontakt mit dem weiteren nicht dargestellten Baumrostsegment eine höhenvariable Anordnung der Baumrostsegmente 10. Dabei können die Brückenelemente 14 mit unterschiedlichen Dachprofilen 15 an der Unterseite der Baumrostsegmente 10 angeordnet werden, um verschiedene, höhenvariable Anordnungen der Baumrostsegmente 10 insbesondere zueinander zu ermöglichen.

Bei der Montage der Baumrostsegmente 10 untereinander kann ein Brückenelement 14 bereits vor Einlegen des Baumrostsegmentes 10 in den Aufnahmerahmen 12 das Brückenelement 14 an der Unterseite eines Baumrostsegmentes 10 angebracht werden, wofür das Brückenelement 14 beispielsweise schwenkbeweglich vormontiert am Baumrostsegment 10 befestigt ist.

Beispielhaft befindet sich auf der Oberseite der beiden aneinander stoßenden Baumrostsegmente 10 ein Halteelement 17, an dem auf nicht näher gezeigte Weise ein Baumschutzgitter angebracht werden kann, das sich über der Ebene der Baumrostsegmente 10 erstreckt. Bei einem vollständigen Aufbau eines Baumrostes 1 können beispielsweise vier Halteelemente 17 vorgesehen werden. Die Befestigung der Halteelemente 17 erfolgt über die Schraubelemente, mit denen auch das Brückenelement 14 auf der unteren Seite der Baumrostsegmente 10 befestigt werden kann.

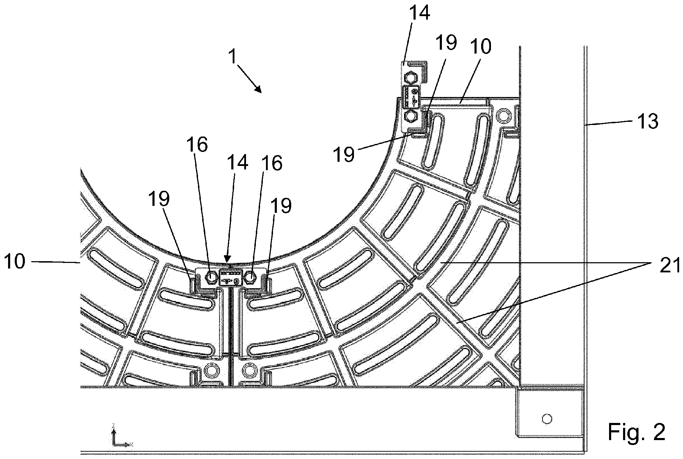

Figur 2 zeigt einen Abschnitt des Baumrostes 1 von der Unterseite, wobei ein Teil des Fundamentes 13 gezeigt ist, und auf dem Fundament 13 befindet sich ein vollständig dargestelltes und ein teilweise dargestelltes Baumrostsegment 10, wobei beide Baumrostsegmente 10 über ein Brückenelement 14 miteinander verbunden sind. Das Brückenelement 14 weist Sechskantaufnahmen 16 auf, die in Durchgangslöcher münden, und in die Sechskantaufnahmen 16 können Sechskantschraubenmuttern eingesetzt werden, in die bei der späteren Montage die Schraubelemente eingeschraubt werden können. Dadurch ergibt sich der Vorteil, dass sich die Sechskantschraubenmuttern in den Sechskantaufnahmen 16 nicht mitdrehen können, wenn die Schraubelemente eingeschraubt werden, wodurch sich Montagevorteile ergeben. Weiterhin dargestellt ist ein Brückenelement 14 an einer freien Kantenseite eines Baumrostsegmentes 10 zur Anordnung eines weiteren nicht dargestellten Baumrostsegmentes 10. Auf der Unterseite der Baumrostsegmente 10 sind Verstärkungsrippen 21 vorhanden, durch die die mechanische Belastbarkeit der Baumrostsegmente 10 verbessert wird.

Die Brückenelemente 14 besitzen eine längliche Ausgestaltung und erstrecken sich unter beide Baumrostsegmente 10 etwa zu gleichen, hälftigen Teilen. Auf der Unterseite der Baumrostsegmente 10 befinden sich Führungsanformungen 19, die ein Vorpositionieren der Brückenelemente 14 ermöglichen, sodass diese sich bereits in der gewünschten Position befinden, wenn das Brückenelement 14 lediglich über ein Schraubelement an einem Baumrostsegment 10 angeordnet wird. Die Führungsanformungen 19 sind im durch einen Metallguss hergestellten Baumrostsegment 10 bereits einteilig mit diesem ausgebildet, und die Führungsanformungen 19 besitzen eine Winkelform, in die die Brückenelemente 14 eingelegt werden können, sodass die Durchgangslöcher im Brückenelement 14 bereits mit der Durchgangsbohrung im Baumrostsegment 10 fluchtet. Dadurch wird ebenfalls eine Erleichterung der Montage der Brückenelemente 14 an den Baumrostsegmenten 10 erreicht.

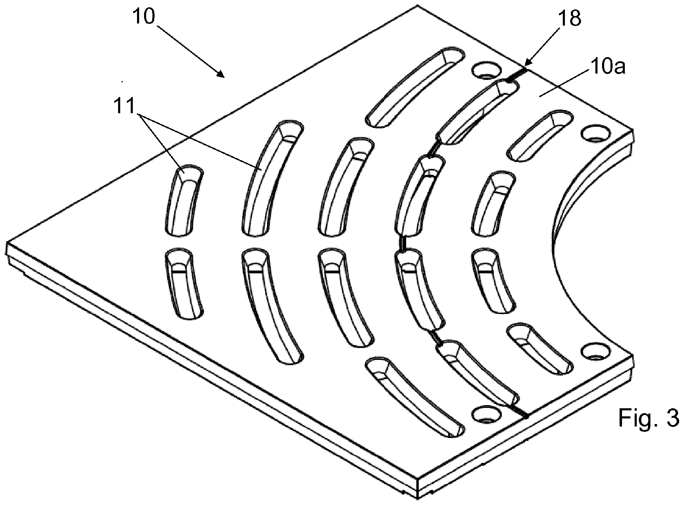

Figur 3 zeigt eine oberseitige Ansicht eines Baumrostsegmentes 10 mit mehreren Durchbrechungen 11, und es ist auf der Oberseite der Baumrostsegmente 10 eine Trennfuge 18 gezeigt, und bei einem Durchtrennen der Trennfuge 18 kann ein inneres Segmentstück 10a vom äußeren, übrigen Baumrostsegment 10 entfernt werden, um den Baumrost 1 dem Stammwachstum des Baumes anzupassen.

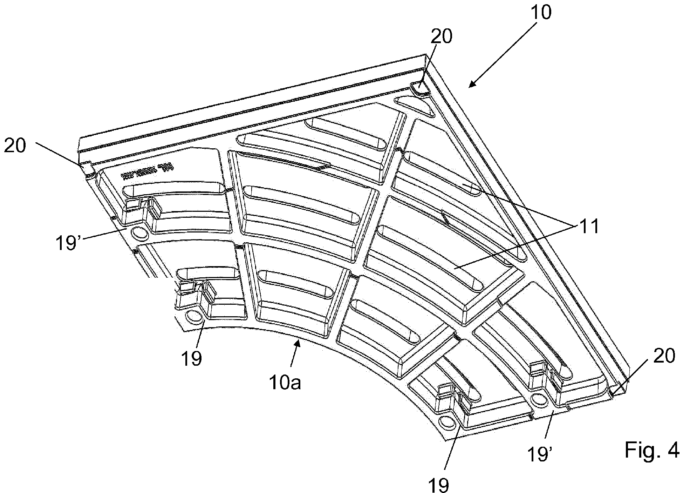

In Figur 4 ist das Baumrostsegment 10 von der Unterseite gezeigt, sodass auch die Durchbrechungen 11 unterseitig sichtbar sind. In den Eckbereichen weist das Baumrostsegment 10 Stollenauflagen 20 auf, über die das Baumrostsegment 10 auf dem Aufnahmerahmen 12 aufgelegt werden kann, um eine ruhige, stabile und klapperfreie Auflage zu erreichen. Zusätzlich kann der Baumrost 1 mit einer dämpfenden Einlage ausgeführt werden, mit der ein Klappern der Baumrostsegmente 10 zusätzlich verhindert wird.

Wird das innenseitig gezeigte innere Segmentstück 10a vom Baumrostsegment 10 abgetrennt, so können weitere Brückenelemente 14 im Bereich der Führungsanformungen 19' eingesetzt werden, um die um die inneren Segmentstücke 10a verkleinerten Baumrostsegmente 10 auf gleiche Weise miteinander zu verbinden wie mit Brückenelementen 14, die in den inneren Führungsanformungen 19 eingesetzt sind, die sich im Bereich des inneren Segmentstückes 10a befinden.

Die Figuren 5 und 6 zeigen perspektivische Ansichten der Brückenelemente 14, wobei in der Ansicht gemäß Figur 5 das Brückenelement 14 mit einer Oberseite gezeigt ist, die ein Dachprofil 15 aufweist, und Figur 6 zeigt das Brückenelement 14 in gedrehter Ansicht mit einer oben liegenden Seite ohne das Dachprofil 15, das durch die Drehung nunmehr die Unterseite bildet. Dadurch, dass das Brückenelement 14 in beliebig gedrehter Anordnung zur Verbindung von zwei Baumrostsegmenten 10 dienen kann, können Neigungen und Höhensprünge zwischen den Baumrostsegmenten 10 entsprechend ausgeglichen werden, indem das Brückenelement 14 in angepasst gedrehter Anordnung unter den Baumrostsegmenten 10 verschraubt wird. Um das Brückenelement 14 unabhängig von der Drehrichtung mit Schraubenmuttern zu befestigen, befinden sich an beiden Enden der Durchgangslöcher 22 Sechskantaufnahmen 16. Die Dachform des Dachprofiles 15 ist durch einen Dachwinkel α angegeben.

Die Erfindung ist nicht auf eine der vorbeschriebenen Ausführungsformen beschränkt, sondern in vielfältiger Weise abwandelbar. Der Schutzumfang der Erfindung ist durch die beigefügten Ansprüche begrenzt.

### Bezugszeichenliste

- 1: Baumrost
- 10: Baumrostsegment
- 10a: inneres Segmentstück
- 11: Durchbrechung
- 12: Aufnahmerahmen
- 13: Fundament
- 14: Brückenelement
- 15: Dachprofil
- 16: Sechskantaufnahme
- 17: Halteelement
- 18: Trennfuge
- 19: Führungsanformung
- 20: Stollenauflage
- 21: Verstärkungsrippe

## Patentansprüche

1. Baumrost (1) zum Abdecken des Wurzelbereiches von Bäumen, aufweisend mehrere flächige, vorzugsweise mit Durchbrechungen (11) versehene Baumrostsegmente (10), die insbesondere mit einem Aufnahmerahmen (12) auf einem Fundament (13) auflegbar sind, wobei zwischen zwei Baumrostsegmenten (10) wenigstens ein Brückenelement (14) angeordnet ist, wobei zur Verbindung der Baumrostsegmente (10) das Brückenelement (14) mit Schraubelementen mit beiden Baumrostsegmenten (10) verbunden ist, **dadurch gekennzeichnet, dass** das Baumrostsegmente (10) gusseisern ist, und dass an der Unterseite der Baumrostsegmente (10) Führungsanformungen (19) ausgebildet sind, durch die die Brückenelemente (14) in eine Montageposition führbar sind.

2. Baumrost (1) nach Anspruch 1, **dadurch gekennzeichnet, dass** das Brückenelement (14) eine geometrische Form aufweist, durch die die Baumrostsegmente (10) höheneinstellbar sind.

3. Baumrost (1) nach Anspruch 1 oder 2, **dadurch gekennzeichnet, dass** das Brückenelement (14) ein Dachprofil (15) aufweist, über das die Befestigungshöhe der Baumrostsegmente (10) zueinander einstellbar ist.

4. Baumrost (1) nach einem der Ansprüche 1 bis 3, **dadurch gekennzeichnet, dass** das Brückenelement (14) auf der Unterseite der Baumrostsegmente (10) angeordnet ist.

5. Baumrost (1) nach einem der vorgenannten Ansprüche, **dadurch gekennzeichnet, dass** das Brückenelement (14) wenigstens eine Sechskantaufnahme (16) aufweist, in das eine Sechskantschraubenmutter einsetzbar ist und wobei zum Verschrauben des Baumrostsegmentes (10) mit dem Brückenelement (14) das Schraubelement in die Sechskantaufnahme (16) einsetzbar ist.

6. Baumrost (1) nach einem der vorgenannten Ansprüche, **dadurch gekennzeichnet, dass** ein Halteelement (17) vorgesehen ist und an das ein Baumschutzgitter anbringbar ist, insbesondere wobei das Halteelement (17) mittels wenigstens einem Schraubelement zum Verschrauben des Brückenelementes (14) auf der Oberseite der Baumrostsegmente (10) anordbar ist.

7. Baumrost (1) nach einem der vorgenannten Ansprüche, **dadurch gekennzeichnet, dass** die Baumrostsegmente (10) eine vordefinierte Trennfuge (18) aufweisen, durch die ein nach innen weisendes inneres Segmentstück (10a) abtrennbar ist.

8. Baumrost (1) nach einem der vorgenannten Ansprüche, **dadurch gekennzeichnet, dass** zwischen den Baumrostsegmenten (10) und dem Aufnahmerahmen (12) Stollenauflagen (20) angeordnet sind.

9. Baumrost (1) nach einem der vorgenannten Ansprüche, **dadurch gekennzeichnet, dass** sich die Führungsanformungen (19) zum Vorpositionieren der Brückenelemente (14) an Unterseiten der Baumrostsegmente (10) befinden.

10. Baumrost (1) nach Anspruch 9, **dadurch gekennzeichnet, dass** das Vorpositionieren der Brückenelemente (14) ermöglicht, dass sich diese bereits in der gewünschten Position befinden, wenn das Brückenelement (14) lediglich über ein Schraubelement an einem Baumrostsegment (10) angeordnet ist.

11. Baumrost (1) nach Anspruch 9 oder 10, **dadurch gekennzeichnet, dass** die Führungsanformungen (19) im durch einen Metallguss hergestellten Baumrostsegment (10) bereits einteilig mit diesem ausgebildet sind.

12. Baumrost (1) nach Anspruch 9 bis 11, **dadurch gekennzeichnet, dass** die Führungsanformungen (19) eine Winkelform besitzen, in die die Brückenelemente (14) eingelegt werden können, sodass Durchgangslöcher im Brückenelement (14) bereits mit einer Durchgangsbohrung im Baumrostsegment (10) fluchten.

13. Baumrost (1) nach einem der vorgenannten Ansprüche, **dadurch gekennzeichnet, dass** die Baumrostsegmente (10) durch ein Gießverfahren mit einer Obergussform und mit einer Untergussform hergestellt sind, wobei die Gussformen derart ausgeführt sind, dass ein durch die Teilungsebene zwischen den Gussformen entstehender Teilungsgrat zur Unterseite der Baumrostsegmente (10) hin verlagert ist.

## Claims

1. Tree grate (1) for covering the root area of trees, having a plurality of flat tree grate segments (10) which are preferably provided with perforations (11) and which can be placed, in particular with a receiving frame (12), on a foundation (13), wherein at least one bridge element (14) is arranged between two tree grate segments (10), wherein the bridge element (14) is connected by screw elements to both tree grate segments (10) in order to connect the tree grate segments (10), **characterised in that** the tree grate segments (10) is cast iron, and **in that** guide formations (19) are formed on the underside of the tree grate segments (10), through which guide formations the bridge elements (14) can be guided into an assembly position.

2. Tree grate (1) according to claim 1, **characterised in that** the bridge element (14) has a geometric shape by means of which the tree grate segments (10) can be adjusted in height.

3. Tree grate (1) according to claim 1 or 2, **characterised in that** the bridge element (14) has a roof profile (15) by means of which the height for fastening the tree grate segments (10) to one another can be adjusted.

4. Tree grate (1) according to any of claims 1 to 3, **characterised in that** the bridge element (14) is arranged on the underside of the tree grate segments (10).

5. Tree grate (1) according to any of the preceding claims, **characterised in that** the bridge element (14) has at least one hexagon receptacle (16) into which a hexagon screw nut can be inserted, and wherein the screw element can be inserted into the hexagon receptacle (16) in order to screw the tree grate segment (10) to the bridge element (14).

6. Tree grate (1) according to any of the preceding claims, **characterised in that** a holding element (17) is provided to which a tree guard can be attached, in particular wherein the holding element (17) can be arranged on the upper side of the tree grate segments (10) by means of at least one screw element for screwing the bridge element (14).

7. Tree grate (1) according to any of the preceding claims, **characterised in that** the tree grate segments (10) have a predefined parting line (18) by which an inner segment piece (10a) facing inwards can be separated.

8. Tree grate (1) according to any of the preceding claims, **characterised in that** stud supports (20) are arranged between the tree grate segments (10) and the receiving frame (12).

9. Tree grate (1) according to any of the preceding claims, **characterised in that** the guide formations (19) are situated on undersides of the tree grate segments (10) in order to pre-position the bridge elements (14).

10. Tree grate (1) according to claim 9, **characterised in that** the pre-positioning of the bridge elements (14) makes it possible for them to be already situated in the desired position when the bridge element (14) is arranged on the tree grate segment (10) by means of only one screw element.

11. Tree grate (1) according to claim 9 or 10, **characterised in that** the guide formations (19) in the tree grate segment (10) produced by a metal casting are already formed in one piece with said tree grate segment.

12. Tree grate (1) according to claim 9 to 11, **characterised in that** the guide formations (19) have an angular shape into which the bridge elements (14) can be inserted, so that through-holes in the bridge element (14) are already aligned with a through-bore in the tree grate segment (10).

13. Tree grate (1) according to any of the preceding claims, **characterised in that** the tree grate segments (10) are produced by a casting process with an upper casting mould and with a lower casting mould, wherein the casting moulds are designed in such a way that a dividing ridge created by the dividing plane between the casting moulds is displaced to the underside of the tree grate segments (10).

## Revendications

1. Grille d'arbre (1) pour recouvrir la zone des racines d'arbres, comprenant plusieurs segments de grille d'arbre plats (10), de préférence munis d'ouvertures (11), qui peuvent être posés sur une fondation (13), en particulier avec un cadre de logement (12), au moins un élément de pont (14) étant disposé entre deux segments de grille d'arbre (10), l'élément de pont (14) étant relié par des éléments de vissage aux deux segments de grille d'arbre (10) pour relier les segments de grille d'arbre (10), **caractérisé en ce que** le segments de grille d'arbre (10) est en fonte et **en ce que** des formations de guidage (19) sont formées sur la face inférieure des segments de grille d'arbre (10), au moyen desquelles les éléments de pont (14) peuvent être guidés dans une position de montage.

2. Grille d'arbre (1) selon la revendication 1, **caractérisée en ce que** l'élément de pont (14) présente une forme géométrique au moyen de laquelle les segments de grille d'arbre (10) peuvent être réglés en hauteur.

3. Grille d'arbre (1) selon la revendication 1 ou 2, **caractérisée en ce que** l'élément de pont (14) présente un profil de toit (15) au moyen duquel la hauteur de fixation des segments de grille d'arbre (10) est réglable les uns par rapport aux autres.

4. Grille d'arbre (1) selon l'une des revendications 1 à 3, **caractérisée en ce que** l'élément de pont (14) est disposé sur la face inférieure des segments de grille d'arbre (10).

5. Grille d'arbre (1) selon l'une des revendications susmentionnées, **caractérisée en ce que** l'élément de pont (14) présente au moins un logement hexagonal (16) dans lequel un écrou de vis hexagonale peut être inséré et dans lequel l'élément de vis peut être inséré dans le logement hexagonal (16) pour visser le segment de grille d'arbre (10) à l'élément de pont (14).

6. Grille d'arbre (1) selon l'une des revendications susmentionnées, **caractérisée en ce qu'**est prévu un élément de maintien (17) auquel peut être fixée une grille de protection d'arbre, l'élément de maintien (17) pouvant notamment être disposé sur la face supérieure des segments de grille d'arbre (10) au moyen d'au moins un élément de vissage pour le vissage de l'élément de pont (14).

7. Grille d'arbre (1) selon l'une des revendications susmentionnées, **caractérisée en ce que** les segments de grille d'arbre (10) ont une ligne de séparation prédéfinie (18), à travers laquelle une pièce de segment interne (10a) dirigée vers l'intérieur peut être séparée.

8. Grille d'arbre (1) selon l'une des revendications susmentionnées, **caractérisée en ce que** des supports de montants (20) sont disposés entre les segments de grille d'arbre (10) et le cadre de logement (12).

9. Grille d'arbre (1) selon l'une des revendications susmentionnées, **caractérisée en ce que** les formations de guidage (19) pour le prépositionnement des éléments de pont (14) sont situées sur les faces inférieures des segments de grille d'arbre (10).

10. Grille d'arbre (1) selon la revendication 9, **caractérisée en ce que** le prépositionnement des éléments de pont (14) leur permet déjà d'être dans la position souhaitée lorsque l'élément de pont (14) est disposé uniquement sur un segment de grille d'arbre (10) par l'intermédiaire d'un élément de vissage.

11. Grille d'arbre (1) selon la revendication 9 ou 10, **caractérisée en ce que** les formations de guidage (19) dans le segment de grille d'arbre (10) produit par une coulée de métal sont déjà formées d'un seul tenant avec celui-ci.

12. Grille d'arbre (1) selon les revendications 9 à 11, **caractérisée en ce que** les formations de guidage (19) ont une forme angulaire dans laquelle les éléments de pont (14) peuvent être insérés, de sorte que les trous traversants de l'élément de pont (14) sont déjà alignés avec un alésage traversant dans le segment de grille d'arbre (10).

13. Grille d'arbre (1) selon l'une des revendications précédentes, **caractérisée en ce que** les segments de grille d'arbre (10) sont produits par un procédé de coulée avec un moule de coulée supérieur et avec un moule de coulée inférieur, les moules de coulée étant conçus de sorte qu'une bavure de séparation résultant du plan de séparation entre les moules est déplacée vers la face inférieure des segments de grille d'arbre (10).
